# FASCICULE DE BREVET EUROPEEN

(11) **EP 2 265 406 B1**
(45) Date de publication et mention de la délivrance du brevet: **31.10.2012**
(21) Numéro de dépôt: 09722035.4
(22) Date de dépôt: 10.03.2009
(51) Int. Cl.: B23K 26/00, B23K 26/24, A01N 1/00, A01N 1/02

(54) **PROCEDE INDUSTRIEL D'ENCAPSULATION DE MATERIEL BIOLOGIQUE EN VUE D'UNE CONSERVATION A TEMPERATURE AMBIANTE AVEC TEST D'ETANCHEITE SOUS VIDE DE L'ENCAPSULAGE**
INDUSTRIELLES VERFAHREN ZUR VERKAPSELUNG VON BIOLOGISCHEM MATERIAL IM HINBLICK AUF LAGERUNG BEI UMGEBUNGSTEMPERATUR MIT EINEM VERKAPSELUNGSVAKUUMDICHTUNGSTEST
INDUSTRIAL METHOD FOR ENCAPSULATION OF BIOLOGICAL MATERIAL WITH A VIEW TO STORAGE AT AMBIENT TEMPERATURE, INCLUDING AN ENCAPSULATION VACUUM SEALING TEST

(30) Priorité: 11.03.2008 FR 0851565
(43) Date de publication de la demande: 29.12.2010
(73) Titulaire: Imagene, 33600 Pessac (FR)
(72) Inventeur: TUFFET, Sophie, F-33800 Bordeaux (FR); DE SOUZA, David Georges, F-33800 Bordeaux (FR)
(74) Mandataire: Fantin, Laurent
(86) Numéro de dépôt international: PCT/FR2009/050394
(87) Numéro de publication internationale: WO 2009/115761

(56) Documents cités:
- WO-A-2004/033729
- CN-A- 101 305 708
- JP-A- 2002 075 108
- US-A1- 2006 099 567
- US-B1- 6 167 750

## Description

La présente invention concerne un procédé industriel d'encapsulation de matériel biologique, notamment de l'ADN, plus particulièrement en vue d'une conservation à température ambiante.

On connaît le brevet EP 1 075 515 qui décrit un procédé de conservation de l'ADN de longue durée dans une capsule métallique, inoxydable et étanche.

Le document WO2004/033729, représentant l'état de la technique le plus proche, décrit un procédé de préparation d'un échantillon de matériel biologique dans un contenant en vue de sa conservation, de sa récupération et de son utilisation ultérieure comprenant les étapes suivantes : préparation du matériel biologique, marquage du contenant avec enregistrement de l'identification, introduction de ce matériel biologique dans ledit contenant sous atmosphère contrôlée, déshydratation du matériel biologique, fermeture du contenant sous atmosphère contrôlée, et mise en station de stockage lorsque le test est favorable.

Cet ADN est encapsulé en atmosphère neutre et avec un très faible degré hygrométrique afin d'en permettre la conservation à température ambiante, évitant ainsi la mise en oeuvre de moyens de réfrigération et/ou congélation complexes et coûteux.

Ce procédé peut être appliqué à tout matériel biologique d'origine humaine, animale ou végétale et comprend notamment : les tissus ; les cellules ; les microorganismes tels que bactéries, champignons, algues monocellulaires; les virus ; les protéines ; les acides nucléiques tels ADN, ARN.

Le matériel biologique est utilisé pour des applications de plus en plus nombreuses tant dans le domaine de la recherche que dans de très nombreux autres domaines comme les biotechnologies, la santé, l'environnement, l'agroalimentaire, l'identification, la justice, la criminalistique et il devient impératif de constituer des banques d'échantillons de matériel biologique ou biothèques.

Une banque d'échantillons exige un classement et une identification d'une rigueur absolue.

De fait, un traitement manuel possible à l'échelle du laboratoire est inadapté à la constitution de telles biothèques.

Il convient donc de concevoir des chaînes automatisées pour la réalisation d'échantillons de matériel biologique en partant du matériel biologique initial jusqu'à son utilisation. Cette utilisation peut intervenir dans un laps de temps très variable jusqu'à plusieurs dizaines d'années plus tard.

Une telle chaîne doit prévoir les étapes suivantes : préparation de l'échantillon de matériel biologique et contrôle de sa qualité, mise en contenant et conservation dudit échantillon puis récupération du matériel biologique en vue de son utilisation à partir de l'échantillon de matériel biologique ainsi conservé. Durant toutes ces étapes, il est nécessaire d'assurer la maîtrise de la qualité et la traçabilité de tous les échantillons.

A cet effet, il est nécessaire de prévoir un contenant identique pour tous les échantillons de façon à permettre les manipulations opérées par les différents automates et les échanges d'échantillons entre utilisateurs par exemple.

Il est également nécessaire d'assurer la conservation à température ambiante dans des conditions limitant les dégradations du matériel biologique, d'autoriser un marquage en vue de répertorier ces échantillons et de les classer tout en atteignant le but premier : rendre possible la récupération du matériel biologique et son utilisation.

Ce contenant doit permettre une manipulation par le procédé selon l'invention, de façon automatisée, et notamment grâce à des supports du type portoir respectant le format des microplaques au standard dit SBS, marque déposée par la société SBS.

Le procédé selon la présente invention consiste à recourir à ce contenant et à prévoir une succession d'étapes afin de traiter le matériel biologique de façon industrielle.

Le procédé selon la présente invention est maintenant décrit en détail selon un mode de réalisation particulier et optimisé.

Le procédé de préparation d'échantillons de matériel biologique selon la présente invention est défini dans la revendication 1.

Le procédé selon la présente invention couvre aussi l'utilisation de l'échantillon préparé après mise en oeuvre des étapes précédentes de la revendication 1.

Ce procédé d'utilisation consiste en la succession des étapes suivantes :
- identification d'un contenant déterminé disposé sur un portoir par lecture du marquage,
- ouverture par poinçonnage du bouchon du contenant,
- remise en solution du matériel biologique dans le contenant,
- prélèvement du matériel biologique récupéré, et
- utilisation notamment à des fins d'analyses.

L' invention est maintenant décrite en détail.

Le procédé selon la présente invention consiste donc à préparer le matériel biologique, à le purifier et à le mettre en solution.

Si nécessaire, ce matériel biologique est réparti en plusieurs échantillons de plus faible volume en fonction des besoins et du volume initial de matériel disponible, c'est l'opération d'aliquotage au cours de laquelle ou préalablement la qualité de l'échantillon est contrôlée. De plus, chaque échantillon et/ou chaque aliquote est répertorié.

Le contrôle qualité du matériel biologique est par exemple la combinaison de techniques telles qu'une mesure de densité optique, une mesure de fluorescence, un gel d'électrophorèse, un dosage de protéines ou une amplification moléculaire. Chaque échantillon contrôlé et remplissant les critères de qualité doit être introduit dans un contenant.

Les paramètres relatifs à ce contenant lui-même sont très importants.

Pour la mise en oeuvre du procédé, le contenant retenu est métallique et de forme cylindrique, obtenu par déformation de métal, du type emboutissage profond. Le métal est avantageusement de l'acier inoxydable 304L ou plus métallurgiquement référencé sous la nuance Z2CN18-10.

Les dimensions de ce contenant, en l'occurrence un diamètre de 7 mm, une longueur de 18 mm de l'enveloppe cylindrique et une épaisseur de paroi de 0,25 mm, sont choisies pour de nombreuses raisons.

Tout d'abord, ces dimensions sont définies pour que chaque contenant puisse être reçu dans le puits d'une microplaque standard notamment une microplaque au standard SBS.

De plus, la nuance d'acier inoxydable permet, outre les qualités intrinsèques liées au matériau telle que la résistance à la corrosion, d'une part une excellente déformabilité autorisant une production de ce type de contenant par emboutissage profond avec une très grande précision et une totale reproductibilité et ceci à un coût tout à fait avantageux et d'autre part une bonne aptitude au soudage.

Bien entendu, un contenant cylindrique pourrait être obtenu à partir d'un cylindre et d'un premier bouchon soudé mais ce mode de réalisation ne serait qu'un équivalent technique. Il aurait pour inconvénient de nécessiter une soudure supplémentaire et présenterait un risque supplémentaire de fuite, c'est pour cette raison que la présente invention retient un contenant obtenu de façon monolithique à partir d'une seule pièce déformée mécaniquement.

De plus, le contenant doit être référencé avant de recevoir le matériel biologique dans le sens où il s'avère nécessaire dans un procédé automatisé comme celui de la présente invention de permettre une traçabilité totale.

Ce marquage est réalisé de préférence au moyen d'un laser. Celui-ci peut effectuer un marquage uniquement par contraste à la surface de la matière par un changement d'état de cette surface, tout à fait lisible à l'oeil et surtout par tout oeil électronique. Il est possible aussi de graver, c'est-à-dire d'attaquer la matière.

Plus particulièrement, le marquage est positionné sur le fond extérieur du contenant et comporte à titre d'identifiant un code matriciel Data Matrix et/ou une chaîne de caractères alpha numériques.

Une autre solution consiste à recourir à une étiquette RFID, utilisant les ondes radiofréquences pour identifier chaque contenant et pour y adjoindre d'autres informations si nécessaire.

Il est à noter qu'un tel marquage rapporté comprend une étiquette qui assure la protection de l'antenne RFID, l'antenne étant l'élément actif et donc protégé. Ce marquage peut être considéré comme pérenne.

Le contenant ainsi marqué est positionné sur un portoir en un lieu dont les coordonnées sont également enregistrées, en plus de celles du portoir.

Le contenant est prêt à recevoir le matériel biologique préalablement identifié si bien qu'un automate peut déposer le matériel biologique dans le contenant référencé de façon à disposer des références associées au matériel biologique et au contenant qui le reçoit.

Dans le cas de l'ADN, le liquide dans lequel il est dissous est préférentiellement introduite dans un insert en verre lui-même préalablement positionné dans le contenant.

Le contenant et le matériel biologique qu'il a reçu, sont soumis à des moyens de déshydratation du type évaporateur-concentrateur. Des moyens connus consistent à utiliser une mise sous vide afin de déshydrater le matériel biologique qui forme alors un dépôt sec sur l'insert en verre.

Cette déshydratation est poussée afin de porter le matériel biologique à un taux de déshydratation adapté pour éviter toute dégradation par l'eau, de l'ordre de 1% pour donner un ordre d'idée dans le cas de l'ADN.

Le contenant et le matériel biologique déshydraté sont alors soumis à une atmosphère contrôlée, par exemple un gaz inerte ou un mélange de gaz inertes, argon, hélium, secs, pour éviter toute réaction d'hydrolyse chimique ou enzymatique et d'oxydation.

Le contenant reçoit un bouchon afin d'emprisonner du gaz inerte dans le contenant, évitant ainsi la présence d'oxygène et d'eau atmosphériques et mettant le matériel biologique à l'abri de la lumière susceptible d'induire des modifications dans le cas de l'ADN par exemple.

Ce bouchon est avantageusement cylindrique, de faible longueur, 3 mm par exemple, prévu pour être introduit dans l'enveloppe cylindrique. Ainsi, une fois introduit, le bord périphérique du bouchon est juxtaposé au bord périphérique du contenant. C'est l'emboîtement d'un cylindre dans un cylindre.

Simultanément, sous atmosphère contrôlée, le bouchon est soudé sur le contenant de sorte à rendre étanche le contenant et garantir le maintien du contenu biologique déshydraté, sous cette atmosphère contrôlée et à l'abri de la lumière.

Le soudage est un soudage sans apport de métal et sans apport de chaleur du type soudage par faisceau laser ou faisceau d'électrons, le faisceau laser étant préféré pour sa mise en oeuvre simple et son coût. De plus et ceci est très important, le soudage par faisceau laser est préférentiellement du type laser *YAG* pulsé, qui limite très fortement l'élévation de température hors de la zone de soudage, au point de la considérer comme négligeable par rapport au contenant. La faible épaisseur des parois nécessite également une puissance limitée et aussi une durée d'intervention très courte.

On entend par les termes "sans apport de chaleur" que la chaleur dégagée est localisée, très faible et que le matériel biologique ne subit aucune dégradation d'autant plus si il est placé dans un insert en verre qui l'isole en partie du contenant métallique.

Le procédé permet ainsi d'obturer de façon étanche des contenants de façon très rapide et de façon fiable, de manière automatique puisque le diamètre est constant et parfaitement reproduit.

Néanmoins, afin de vérifier que le contenant est bien étanche et que le matériel biologique conservera son intégrité, le procédé selon l'invention prévoit un test systématique d'étanchéité aux gaz après soudage.

Ce test consiste à placer le contenant soudé dans une enceinte mise au vide, enceinte dans laquelle est placé un capteur apte à détecter le gaz ou le mélange de gaz de l'atmosphère contrôlée introduite et emprisonné dans le contenant.

En cas de défaut d'étanchéité de la soudure, des molécules du ou des gaz emprisonnés dans le contenant vont s'échapper lors de la mise en dépression de l'enceinte et vont être détectées par le capteur, engendrant un déclassement de l'échantillon avec pour conséquence la sortie de la chaîne du contenant défectueux.

Le matériel biologique peut être récupéré et replacé dans un nouveau contenant. Dans le cas où le test de fuite s'avère satisfaisant, le contenant obturé de façon étanche est repositionné sur son portoir et les différents contenants peuvent être stockés dans une biothèque par exemple.

On dispose alors de portoirs référencés du type à microplaques dans chacun des puits desquels on trouve un contenant référencé et son matériel biologique, également référencé.

Il est donc aisé de classer ces échantillons ainsi réalisés.

La conservation est réalisée à température ambiante pour la plupart des échantillons.

Néanmoins, grâce au procédé selon l'invention, on constate que certains échantillons de matériel biologique fragile qu'il convenait de conserver à des températures de congélation plus basses ou égales à - 20°C, peuvent maintenant être conservés à des températures proches de zéro par la mise en oeuvre du procédé selon l' invention, ce qui est un atout considérable surtout sur de très longues périodes de conservation.

Le procédé selon la présente invention prévoit aussi la récupération et l'utilisation de ce matériel biologique puisque c'est l'essence même de la présente invention : conserver pour utiliser.

A cet effet, le procédé prévoit des moyens de remise en solution dans un solvant du matériel biologique de façon à permettre son utilisation à des fins d'analyses par exemple.

Le procédé prévoit donc la collecte du ou des échantillons recherchés et répertoriés dans la biothèque.

Une fois l'échantillon identifié, le contenant peut être ouvert par simple poinçonnage du bouchon. Ce poinçonnage évite avantageusement l'introduction de métal et d'autres particules qui pourraient être issues d'une ouverture par usinage mécanique. De plus, par un effet de mémoire de forme lié à l'emboutissage profond réalisé, les parties découpées se courbent en laissant une ouverture parfaitement dégagée et accessible aux moyens de prélèvement tels que des pipettes automatisées.

La position du poinçonnage est parfaitement maîtrisée et centrée dans le bouchon si bien que les déplacements des pipettes des automates peuvent être parfaitement programmés.

Les différentes étapes du procédé tel que décrit peuvent être réalisées successivement ou parallèlement. Ainsi, le marquage du contenant peut être réalisé parallèlement à la préparation du matériel biologique de façon que le matériel puisse être introduit dans le contenant dédié ainsi marqué.

Le marquage pourrait aussi être réalisé préalablement à la préparation du matériel suivant l'organisation de la chaîne.

## Revendications

1. Procédé de préparation d'un échantillon de matériel biologique dans un contenant en vue de sa conservation, de sa récupération et de son utilisation ultérieure, comprenant la succession d'étapes suivantes :
- préparation du matériel biologique avec mise en solution,
- contrôle qualité du matériel biologique ainsi préparé,
- marquage du contenant avec enregistrement de l'identification,
- introduction de ce matériel biologique dans ledit contenant sous atmosphère controllée,
- déshydratation du matériel biologique,
- fermeture du contenant sous atmosphère contrôlée et à l'abri de la lumière,
- test d'étanchéité du contenant en plaçant le contenant fermé dans une enceinte mise au vide, en détectant le gaz ou le mélange de gaz de l'atmosphère contrôlée introduite et emprisonné dans le contenant qui s'échappe du contenant sous l'effet du vide, et
- mise en station de stockage lorsque le test est favorable.

2. Procédé de préparation d'un échantillon de matériel biologique selon la revendication 1, **caractérisé en ce que** le contenant étant métallique et comprenant un bouchon, la fermeture est assurée par soudure de ce bouchon sans échauffement thermique.

3. Procédé de préparation d'un échantillon de matériel biologique selon la revendication 2, **caractérisé en ce que** la soudure est effectuée par soudage à l'aide d'un faisceau laser du type laser YAG pulsé.

4. Procédé de préparation d'un échantillon de matériel biologique selon la revendication 3, **caractérisé en ce que** l'atmosphère contrôlée est composée d'un gaz inerte ou d'un mélange de gaz inertes secs pour éviter toute réaction d'hydrolyse chimique ou enzymatique et d'oxydation dudit matériel biologique.

5. procédé de préparation d'un échantillon de matériel biologique selon l'une quelconque des revendications précédentes, **caractérisé en ce que** la mise en station de stockage prévoit le placement de chaque contenant sur un portoir, une identification du portoir et un enregistrement de la position dudit contenant sur le portoir.

6. Procédé de préparation d'un échantillon de matériel biologique selon l'une quelconque des revendications précédentes, **caractérisé en ce que** la déshydratation est réalisée par une mise sous vide.

7. Procédé d'utilisation de l'échantillon préparé, après la mise en oeuvre du procédé de préparation de l'échantillon selon l'une des revendications 1 à 6, **caractérisé en ce qu'**il comprend les étapes suivantes :
- identification d'un contenant déterminé disposé sur un portoir par lecture du marquage,
- ouverture par poinçonnage du bouchon du contenant,
- remise en solution du matériel biologique dans le contenant,
- prélèvement du matériel biologique ainsi récupéré, et
- utilisation du matériel biologique prélevé notamment à des fins d'analyses.

## Claims

1. Method for the preparation of a sample of biological material in a container for the purpose of its storage, its recovery, and its subsequent use, **characterized in that** it comprises the succession of the following stages:
Preparation of the biological material with solubilization,
- Quality control of the thus prepared biological material,
- Labeling of the container with recording of the identification,
- Introduction of this biological material into said container,
- Dehydration of the biological material,
- Sealing of the container under controlled atmosphere,
- Sealing test of the container by placing the sealed container in a chamber that is placed under vacuum, and by detecting the gas or the mixture of gas from the controlled atmosphere that is introduced and imprisoned in the container that escapes from the container under the action of vacuum, and
- Placement in a storage station when the test is favorable.

2. Method for preparation of a sample of biological material according to Claim 1, wherein the container is metal and comprises a stopper, and the sealing is ensured by welding this stopper without thermal heating.

3. Method for preparation of a sample of biological material according to Claim 2, wherein the welding is carried out by welding using a laser beam of the pulsed YAG laser type.

4. Method for preparation of a sample of biological material according to Claim 3, wherein the controlled atmosphere is composed of an inert gas or a mixture of dry inert gases to prevent any reaction of chemical or enzymatic hydrolysis and oxidation of said biological material.

5. Method for the preparation of a sample of biological material according to any of the preceding claims, wherein the placement in a storage station provides for the placement of each container on a test tube rack, an identification of the test tube rack, and a recording of the position of said container on the test tube rack.

6. Method for the preparation of a sample of biological material according to any of the preceding claims, wherein dehydration is done by being placed under vacuum.

7. Method for using a sample that is prepared by the implementation of the method according to one of Claims 1 to 6, wherein it comprises the following stages:
- Identification of a determined container placed on a test tube rack by reading the labeling,
- Opening by perforation of the stopper of the container,
- Resolubilization of the biological material in the container,
- Sampling of the thus recovered biological material, and
- Use of the biological material sampled in particular for purposes of analysis.

## Patentansprüche

1. Verfahren zur Herstellung einer biologischen Materialprobe in einem Behälter mit dem Ziel ihrer Konservierung, ihrer Wiederherstellung und ihrer weiteren Verwendung, das die Abfolge der folgenden Schritte aufweist :
- Herstellen von biologischem Material in Lösung,
- Qualitätskontrolle des so hergestellten biologischen Materials,
- Kennzeichnung des Behälters mit Registrierung der Identifikation,
- Einbringen dieses biologischen Materials in den Behälter unter Schutzatmosphäre,
- Dehydrierung des biologischen Materials,
- Verschließen des Behälters unter Schutzatmosphäre und unter Schutz vor Licht,
- Überprüfung der Dichtigkeit des Behälters, indem der geschlossene Behälter in einem Vakuumbehälter eingebracht wird und indem das Gas oder die Gasmischung der in den Behälter eingebrachten und eingeschlossenen Schutzatmosphäre detektiert wird, die aufgrund des Vakuums aus dem Behälter entweicht, und
- Überführen in ein Lager wenn die Überprüfung günstig verläuft.

2. Verfahren zur Herstellung einer biologischen Materialprobe nach Anspruch 1, **dadurch gekennzeichnet, dass** der Behälter aus Metall ist und einen Verschluss aufweist, dessen Schließung durch Verschweißen ohne thermische Erwärmung gewährleistet wird.

3. Verfahren zur Herstellung einer biologischen Materialprobe nach Anspruch 2, **dadurch gekennzeichnet, dass** das Verschweißen durch ein Verschweißen mit Hilfe eines Laserstrahls vom Typ eines gepulsten YAG-Lasers ausgeführt wird.

4. Verfahren zur Herstellung einer biologischen Materialprobe nach Anspruch 3, **dadurch gekennzeichnet, dass** die Schutzatmosphäre sich aus einem inerten Gas oder einer Mischung inerter trockener Gase zusammensetzt, um jede Reaktion einer chemischen oder enzymatischen Hydrolyse oder einer Oxidation des biologischen Materials zu vermeiden.

5. Verfahren zur Herstellung einer biologischen Materialprobe nach einem der vorhergehenden Ansprüche, **dadurch gekennzeichnet, dass** das Überführen in ein Lager die Ablage von jedem Behälter auf einem Träger, eine Identifizierung des Trägers und eine Registrierung der Lage des Behälters auf dem Träger vorsieht.

6. Verfahren zur Herstellung einer biologischen Materialprobe nach einem der vorhergehenden Ansprüche, **dadurch gekennzeichnet, dass** die Dehydrierung durch die Anwendung eines Vakuums bewerkstelligt wird.

7. Verfahren zur Verwendung einer hergestellten Probe nach Anwendung des Verfahrens zur Herstellung der Probe nach einem der Ansprüche 1 bis 6, **dadurch gekennzeichnet, dass** es folgende Schritte aufweist:
- Identifizierung eines bestimmten, auf einem Träger abgelegten Behälters durch Ablesen der Kennzeichnung,
- Öffnen durch Stanzen des Verschlusses des Behälters,
- Erneutes Lösen des biologischen Materials im Behälter;
- Entnahme des auf diese Weise wiedergewonnenen biologischen Materials und,
- Verwenden des entnommenen biologischen Materials insbesondere zu Analysezwecken.
